## Europäisches Patentamt
## European Patent Office
## Office européen des brevets

(19)

(11) Veröffentlichungsnummer: **0 050 590**
**B1**

(12) **EUROPÄISCHE PATENTSCHRIFT**

(45) Veröffentlichungstag der Patentschrift:
**27.06.84**

(21) Anmeldenummer: **81810413.5**

(22) Anmeldetag: **14.10.81**

(51) Int. Cl.³: **F 17 D 5/06**

(54) Überwachungsvorrichtung für ein Leitungssystem.

(30) Priorität: **20.10.80 CH 7816/80**

(43) Veröffentlichungstag der Anmeldung:
**28.04.82 Patentblatt 82/17**

(45) Bekanntmachung des Hinweises auf die Patenterteilung:
**27.06.84 Patentblatt 84/26**

(84) Benannte Vertragsstaaten:
**AT CH DE FR GB LI NL SE**

(56) Entgegenhaltungen:
**DE - A - 2 529 791**
**DE - A - 2 805 908**
**GB - A - 2 006 966**

(73) Patentinhaber: **GRETAG Aktiengesellschaft,
Althardstrasse 70, CH-8105 Regensdorf (CH)**

(72) Erfinder: **Düringer, Heinrich, Haldenstrasse 42,
CH-8105 Watt-Regensdorf (CH)**

(74) Vertreter: **Pirner, Wilhelm et al, Patentabteilung der
CIBA-GEIGY AG Postfach, CH-4002 Basel (CH)**

## Beschreibung

Die Erfindung betrifft eine Überwachungsvorrichtung für ein Leitungssystem gemäß Oberbegriff des Patentanspruchs 1.

Solche z. B. aus der DE-A-2 847 171 bekannten Vorrichtungen erfassen unerlaubte, unerwünschte oder einfach von der irgendwie definierten Norm abweichende Strömungszustände im Leitungssystem und zeigen diese an bzw. lösen irgendeine entsprechende Reaktion, z. B. das Schließen eines Notventils oder dgl., aus. Bei Leitungssystemen, in denen das Fördermedium zeitweise ruht, bezieht sich die Überwachung während des Ruhezustands auf Leckströmungen, wohingegen im Betriebszustand, also wenn das Medium gefördert wird, das Auftreten von Verstopfungen oder dgl. erfaßt wird. Ein bevorzugtes Anwendungsgebiet solcher Überwachungsvorrichtungen sind Ölheizungsanlagen, die insbesondere aus umwelttechnischen Gründen besonders sorgfältig auf Leckverluste kontrolliert werden müssen.

Während die Erkennung von Leitungsverstopfungen etc. im wesentlichen unproblematisch ist, bringt die einwandfreie Erfassung von geringsten Leckströmungen eine Reihe von technischen Schwierigkeiten mit sich.

Zunächst einmal ist ein geeigneter Meßwandler erforderlich, der einerseits kleinste Leckströmungen bis hinab in den Kubikmillimeter-pro-Sekunde-Bereich mit genügender Genauigkeit erfassen und andererseits auch die bei Förderbetrieb um viele Größenordnungen größeren Mediumströme verarbeiten kann. Ein solcher Meßwandler steht neuerdings zur Verfügung und ist z. B. in der DE-A-2 847 171 beschrieben.

Zum anderen ist aber auch die Auswertung des vom Meßwandler bzw. damit aufgebauten Strömungsmesser erzeugten, strömungsabhängigen Meß-Signals äußerst kritisch, insbesondere was die Erkennung von Leckströmungen betrifft. So treten im Ruhezustand des Leitungssystems erfahrungsgemäß stets temperatur- oder systembedingte Strömungen auf, die in derselben Größenordnung wie die kleinsten zu erfassenden Leckströme oder zum Teil auch noch erheblich darüber liegen. Solche temperatur- oder systembedingten Strömungen müssen aber von echten Leckströmungen unterschieden werden können und dürfen nicht zur Alarmauslösung führen.

Durch die vorliegende Erfindung soll nun dieses Problem überwunden und eine Überwachungsvorrichtung geschaffen werden, mit welcher fehlerhafte Strömungszustände in einem Leitungssystem einwandfrei festgestellt werden können.

Die erfindungsgemäße Überwachungsvorrichtung ist durch die im zweiten Teil des Patentanspruchs 1 angeführten Merkmale gekennzeichnet.

Im folgenden wird die Erfindung anhand der Zeichnung näher erläutert. Es zeigt

Fig. 1 ein Blockschema einer an ein zu überwachendes Ölheizungssystem angeschlossenen erfindungsgemäßen Überwachungsvorrichtung und

Fig. 2 ein für z. B. ein Ölheizungssystem typisches Strömungsdiagramm zur Erläuterung der Funktionsweise der Vorrichtung.

Bei dem in der Zeichnung beispielsweise und stark vereinfacht dargestellten Leitungssystem, dessen Betriebs- und Strömungszustände überwacht werden sollen, handelt es sich um ein Ölheizungssystem für z. B. ein Einfamilienhaus. Es umfaßt im wesentlichen einen Öltank 1 und einen Ölbrenner 2 sowie eine Brennersteuerung 3 mit Sicherheitsthermostat 4 und Raumthermostat 5. In die den Tank mit dem Brenner verbindende Ölförderleitung 6 sind ein Strömungsmeßwandler 7 und ein elektromagnetisches Absperrventil 60 eingeschaltet.

Der Strömungsmeßwandler 7 ist vorzugsweise von der in der DE-A-2 847 171 (= GB-A-2 006 966) beschriebenen Art und enthält einen im Querschnitt weiteren Haupt- und einen engeren Nebenströmungskanal. Im Hauptströmungskanal ist ein Rückschlagventil angeordnet, welches erst ab einem gewissen Mindestdifferenzdruck öffnet, so daß kleine Mediumsbewegungen ausschließlich über den Nebenströmungskanal stattfinden. In letzterem sind in gegenseitigem Abstand zwei Temperaturfühler 71 und 72 und ein Heizelement 73 angeordnet. Näheres ergibt sich aus der erwähnten DE-A-2 847 171.

Die Überwachungsvorrichtung umfaßt außer dem schon genannten Strömungsmeßwandler 7 drei elektronische Funktionsblöcke, und zwar eine Meßeinheit 8, eine Steuereinheit 9 und eine Versorgungs-, Bedien- und Anzeigeeinheit 10. Der Strömungsmeßwandler und die Meßeinheit bilden zusammen einen Strömungsmesser, die Steuereinheit wertet das von der Meßeinheit erzeugte strömungsabhängige Meß-Signal nach noch zu erläuternden Kriterien aus und steuert eine in der Einheit 10 enthaltene Alarmanzeige entsprechend an.

Die Meßeinheit 8 besteht aus einer Referenzspannungsquelle 81, einem Regelverstärker 82 und einem Leistungsverstärker 83. Die beiden Eingänge des Regelverstärkers 82 sind mit je einem der beiden im Strömungsmeßwandler 7 angeordneten Temperaturfühler 71 bzw. 72 verbunden.

Der Leistungsverstärker 83 treibt das Heizelement 73. Die Meßeinheit 8 ermittelt das Verhältnis der temperaturabhängigen Spannungen über den beiden Temperaturfühlern 71 und 72, bildet die Differenz zwischen diesem Verhältnis und einer Referenzspannung und steuert aufgrund dieser Differenz das Heizelement 73 derart, daß die Temperaturdifferenz zwischen den beiden Meßfühlern einen konstanten, durch die Höhe der Referenzspannung gegebenen Wert beibehält. Die Ausgangsspannung $V_H$ des Leistungsverstärkers 83 ist dann ein Maß für die Strömung durch den Strömungsmeßwandler 7.

Die Referenzspannungsquelle 81 erzeugt neben der für die Strömungsmessung benötigten Referenzspannung noch zwei weitere Referenzspannungen, und zwar eine kleine Spannung $V_{AS}$ entsprechend einer Alarmschwelle AS und eine größere Spannung $V_{AS}$ entsprechend einer Hilfsschwelle HS. Die Alarmschwellenspannung $V_{AS}$ ist mittels eines Potentiometers 91 einstellbar.

Die Steuereinheit 9 wertet die von der Meßeinheit 8 erzeugten Signale aus und besteht neben dem Einstellpotentiometer 91 für die Alarmschwellenspannung aus einem Fensterdiskriminator 92, einem Kommutator 93, einem umschaltbaren Zeitglied 94 und einem Leistungsverstärker 95. Der Fensterdiskriminator 92 bestimmt die Lage des Signals $V_H$ relativ zu den beiden Schwellenspannungen $V_{AS}$ und $V_{HS}$ und der Kommutator 93 verknüpft die Ausgangssignale des Fensterdiskriminators mit einem EIN/AUS-Signal von der Brennersteuerung der Ölheizung und einem Alarm-Selbsthaltesignal und steuert damit Start, Halt, Rücksetzung und Laufzeitumschaltung des Zeitgliedes 94. Letzteres treibt dann den Leistungsverstärker 95, der seinerseits einen Alarm 11 und das Notabsperrventil 60 betätigt.

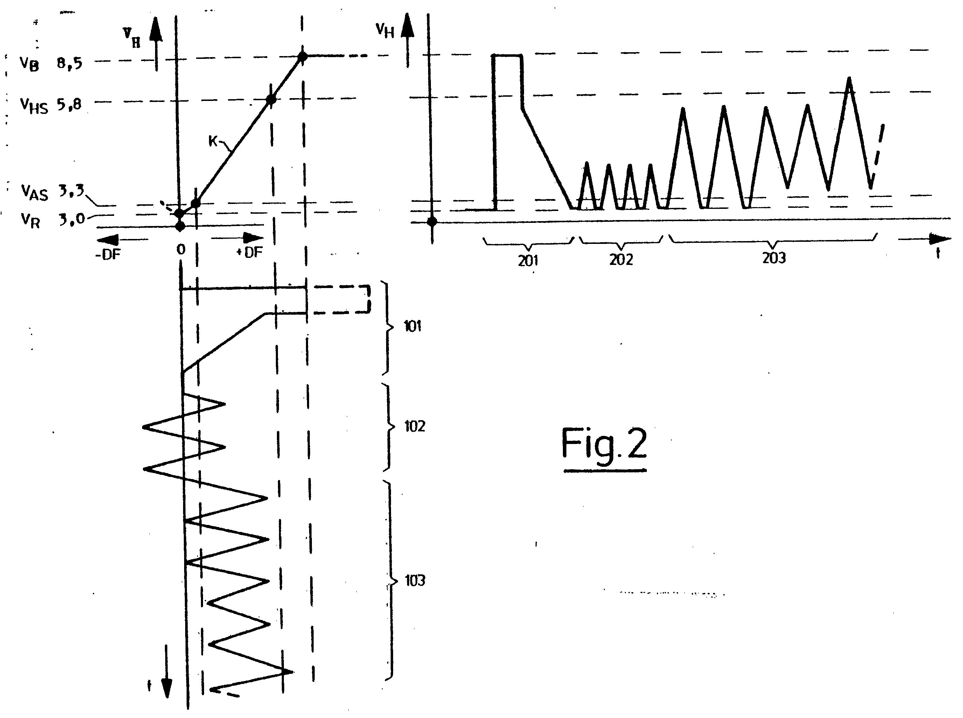

Die Funktionsweise der Vorrichtung wird nun anhand der Fig. 2 näher beschrieben. Die Fig. 2 zeigt die Strömungs-Ausgangsspannung (DF—$V_H$)-Kennlinie K des aus Meßeinheit 8 und Strömungsmeßwandler 7 bestehenden Strömungsmessers (DF-Achse im logarithmischen Maßstab) sowie einige für z. B. Ölleitungssysteme charakteristische zeitliche Strömungsverläufe mit den zugehörigen zeitlichen Verläufen der Ausgangsspannung $V_H$.

Beginnend mit einem Ruhewert $V_R$ verläuft die Kennlinie K zunächst über ein unwesentliches Anlaufstück leicht gekrümmt und dann über den gesamten Bereich im wesentlichen linear bis zu einem Maximalwert $V_B$, bei dem die Begrenzung des Strömungsmeßwandlers einsetzt. Der Aussteuerbereich $V_R$—$V_B$ des Strömungsmeßwandlers entspricht ganz kleinen Mediumsströmungen, wie sie durch Lecks und Temperatureinflüsse etc. verursacht werden. Bei Förderbetrieb, also wenn der Ölbrenner läuft, befindet sich der Meßwandler stets in der Begrenzung. Außerdem ist die Ausgangsspannung $V_H$ unabhängig von der Strömungsrichtung. Näheres über den Strömungsmeßwandler und die Meßschaltung findet sich u. a. auch in der schon genannten DE-A-2 847 171.

Die Diagrammabschnitte 101 und 201 zeigen nun den Strömungsverlauf und das zugehörige Meß-Signal $V_H$ für den Förderbetrieb. Beim Einschalten steigt die Strömung sprunghaft an, und das Signal $V_H$ erreicht seinen Begrenzungswert $V_B$, wo es verbleibt. Beim Ausschalten des Brenners wird zwar die Strömung ebenfalls sehr rasch wieder absinken, im Bereich sehr kleiner Bewegungen kommt es jedoch zu Nachströmerscheinungen, welche bewirken, daß das Meß-Signal $V_H$ erst nach einer gewissen Abklingzeit auf den Ruhewert $V_R$ zurückgeht. Diese Nachströmerscheinungen müssen bei der Auswertung des Meß-Signals $V_H$ berücksichtigt werden und dürfen nicht zur Alarmauslösung führen.

Die Diagrammabschnitte 102 und 202 zeigen charakteristische, durch Temperaturunterschiede und andere Effekte bedingte Wechselströmungen im Ruhezustand des Leitungssystems, wenn also kein Öl zum Brenner gefördert wird. Diese Wechselströmungen bewirken den im Abschnitt 202 dargestellten Signal-Verlauf, bei welchem die Spannung zwischen zwei Spitzen immer wieder auf den Ruhewert $V_R$ zurückgeht. Da die Größe (Amplitude) dieser Wechselströmungen nicht konstant ist, kann ihr Einfluß nicht einfach durch entsprechend hohe Einstellung (über den höchsten zu erwartenden Signal-Spitzen) einer Alarm-Ansprechschwelle ausgeschaltet werden. Dadurch würde nämlich gleichzeitig auch die Empfindlichkeit für zu erkennende Leckströmungen wesentlich herabgesetzt werden.

Noch krasser zeigt sich dieses Problem, wenn die genannten Wechselströmungen irgendwelchen systembedingten temporären Gleichströmungen überlagert sind, wie dies in den Abschnitten 103 und 203 dargestellt ist. Dabei können die Signalspitzen in Extremfällen sogar bis in die Nähe des Begrenzungseinsatzes kommen, ohne daß ein Fehler, d. h. ein Leck im Leitungssystem, vorliegt. Auch in diesem Falle darf daher kein Alarm ausgelöst werden.

Gemäß einem Grundgedanken der Erfindung werden nun die eben beschriebenen systembedingten und durchaus nicht fehlerhaften Strömungszustände von leck- oder störungsbedingten Zuständen dadurch unterschieden, daß nicht der momentane Strömungszustand, d. h. die momentane Meßspannung $V_H$, für den Alarm-Entscheid maßgebend ist, sondern daß die Strömung bzw. die für diese indikative Meßspannung $V_H$ über eine gewisse Alarmverzögerungszeitspanne beobachtet und ein Alarm nur dann ausgelöst wird, wenn der nach gewissen Kriterien und dem jeweiligen Betriebszustand des Leitungssystems (Brenner EIN/AUS) als abnorm bewertete Strömungszustand länger als die erwähnte Verzögerungszeit anhält. Dabei können gemäß einer besonders vorteilhaften Weiterbildung der Erfindung auch verschieden lange Alarmverzögerungszeiten vorgesehen sein, die angewandt werden, je nachdem, wie weit der momentane Strömungszustand vom Normalbzw. Idealzustand abweicht.

Als Kriterien für das Abweichen vom Normalzustand werden in der Praxis zwei Schwellen vorgegeben, und zwar eine tiefere Alarmschwelle AS mit der zugehörigen Spannung $V_{AS}$ und eine höhere Hilfsschwelle HS mit der zugehörigen Spannung $V_{HS}$. Die Alarmschwelle AS liegt knapp über dem Ruhewert $V_R$, z. B. etwa am unteren Ende des linearen Kennlinienteils und entspricht in der Praxis einem Durchsatz von etwa 1,3 mm³/sec. Die Hilfsschwelle HS liegt etwa im oberen Drittel des Aussteuerbereichs des Strömungswandlers entsprechend einem Durchsatz von etwa 30 mm³/sec. Die zugehörigen Spannungswerte $V_{AS}$ und $V_{HS}$ ergeben sich aus der Zeichnung.

Die Unterscheidung zwischen systembedingten Strömungen und Leckströmungen erfolgt nun nach der Erfindung durch Vergleich des Meß-Signals mit diesen beiden Schwellenwerten in Verbindung mit zwei Verzögerungszeitspannen $\tau_1$ und $\tau_2$, wobei die längere Spanne $\tau_2$ z. B. 24 Minuten und die kürzere Spanne $\tau_1$ z. B. 3 Minuten dauert. Die Länge der Alarmverzögerungszeitspannen ist nicht sehr kritisch und hängt natürlich auch von der Höhe der beiden Schwellenwerte ab bzw. von der Mediumsmenge, welche im Falle eines Lecks bis zum Erkennen desselben bzw. Auslösen des Alarms ausströmen darf. Bei der genannten Bemessung der beiden Schwellen sind die Werte von etwa 3 bzw. etwa 24 Minuten praxisgerecht.

Im Ruhezustand des Leitungssystems, wenn also kein Öl gefördert wird bzw. der Brenner nicht läuft, wird das System auf Lecks überwacht.

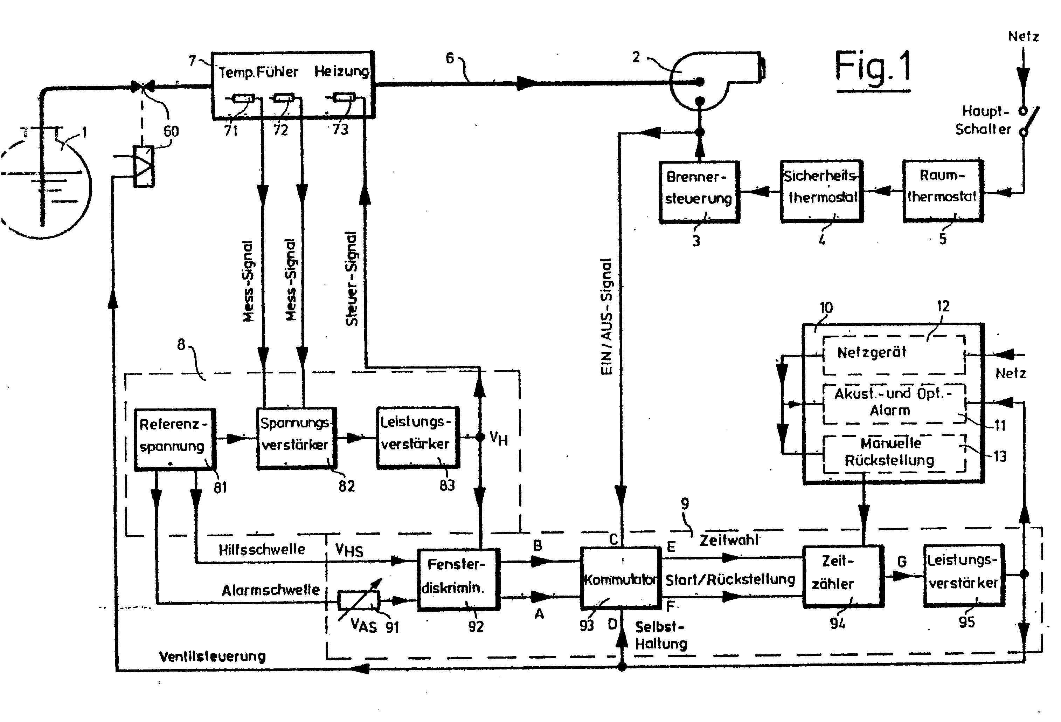

Solange die Strömung die Alarmschwelle AS nicht überschreitet, passiert überhaupt nichts. Sobald jedoch die Alarmschwelle überschritten wird, beginnt die längere der beiden Alarmverzögerungszeiten zu laufen (Zeitglied 94 in Fig. 1 mit Eigenzeit $\tau_2$). Wenn nun das Meßsignal $V_H$ innerhalb dieser Zeitspanne (24 Minuten) wieder unter die Alarmschwelle sinkt, wird das als Wechselströmung interpretiert und kein Alarm ausgelöst. Bei jedem neuerlichen Überschreiten beginnt die Alarmverzögerungszeit wieder von vorne zu laufen. Kehrt das Meß-Signal nicht innerhalb der Alarmverzögerungszeit $\tau_2$ unter die Alarmschwelle zurück, wird dies als Vorliegen eines Lecks gewertet und Alarm ausgelöst. (Die Vorrichtung gerät dabei in Selbsthaltung, welche durch manuelle Rückstellung aufgehoben werden kann.)

Sollte das Meß-Signal $V_H$ nicht nur die Alarmschwelle AS, sondern auch die Hilfsschwelle HS überschreiten (siehe Abschnitte 103 und 203 der Fig. +2), so tritt die kürzere Alarmverzögerungszeit $\tau_1$ ins Spiel. Falls die Hilfsschwelle innerhalb der kürzeren Verzögerungszeit (3 min) nach dem Überschreiten der Alarmschwelle überschritten wird, passiert vorerst nichts. Kehrt jedoch die Strömung innerhalb dieser kürzeren Alarmzeit nicht unter die Hilfsschwelle zurück, so wird Alarm ausgelöst. Sinkt die Strömung innerhalb dieser z. B. drei Minuten wieder unter die Hilfsschwelle, so wird wieder die längere Verzögerungszeit maßgebend. Dabei kann — je nach Konzeption des Zeitglieds — die bis dahin bereits verstrichene Zeit berücksichtigt oder eine neue Verzögerungszeitspanne gestartet werden. In letzterem Falle kann die Gesamt-Alarmverzögerung somit bis maximal die Summe der beiden Alarmverzögerungen betragen.

Falls die Hilfsschwelle erst nach Ablauf der kürzeren Verzögerungszeit überschritten wird, wird ein Leck angenommen und sofort Alarm ausgelöst.

Im Betriebszustand des Leitungssystems, also bei laufender Ölförderung bzw. laufendem Brenner, sind die Verhältnisse analog, indem auch jetzt wieder beobachtet wird, ob allfällige vom diesem Betriebszustand entsprechenden Normal abweichende Zustände länger als die eine oder die andere der beiden Verzögerungszeitspannen andauern. Und zwar ist beim Einschalten und während des Brennerlaufs nur die kürzere Alarmverzögerung aktiv (Eingang E des Zeitglieds konstant auf niedrigem Pegel), während beim Ausschalten des Brenners sukzessive zunächst die kürzere und dann die längere Zeitspanne zum Tragen kommen.

Beim Einschalten nimmt die Strömung normalerweise sofort ihren Maximalwert an. Wird jedoch die Hilfsschwelle HS innerhalb der kürzeren Alarmverzögerungszeit nicht überschritten, so wird eine Störung (Blockierung der Leitung) angenommen und Alarm ausgelöst. Dasselbe passiert, wenn die Strömung bei eingeschaltetem Brenner länger als die Alarmverzögerungszeit unter die Hilfsschwelle sinkt. Beim Einschalten und während des Betriebs des Brenners funktioniert die Überwachungsschaltung somit nicht als Leckdetektor, sondern überwacht den korrekten Betrieb des Leitungssystems.

Beim Abschalten des Brenners muß die Strömung innerhalb der kürzeren Alarmverzögerungszeit unter die Hilfsschwelle sinken, andernfalls wird Alarm ausgelöst. Beim Unterschreiten der Hilfsschwelle wird auf die längere Alarmverzögerungszeit umgeschaltet, wobei wiederum nur noch die Restzeit oder auch noch die gesamte längere Verzögerungszeit zur Anwendung gelangen kann. Innerhalb dieser Zeit muß die Strömung unter die Alarmschwelle abgesunken sein. Andernfalls wird dies als Leck interpretiert und Alarm ausgelöst. Nach dem Abschalten des Brenners funktioniert die Vorrichtung somit wieder als Leckdetektor.

Wie schon erwähnt, erfolgt die Auswertung des Meß-Signals $V_H$ in der Steuereinheit 9. Die einzelnen Funktionsgruppen dieser Einheit und ihre Wirkungsweise werden im folgenden näher beschrieben.

Der Fensterdiskriminator 92, der beispielsweise durch eine integrierte Schaltung des Typs TCA 965 realisiert sein kann, vergleicht die ihm zugeführte, strömungsabhängige Spannung $V_H$ mit den beiden Schwellenspannungen $V_{AS}$ und $V_{HS}$ und gibt an seinen beiden Ausgängen A und B binäre Logiksignale H bzw. L ab gemäß der folgenden Tabelle:

| $V_H$ | A | B |
|---|---|---|
| $< V_{AS}$ | L | H |
| $V_{AS} \leq V_H \leq V_{HS}$ | H | H |
| $> V_{HS}$ | H | L |

Der Kommutator 93, der eine beliebig realisierte Logikschaltung ist, korreliert die Signale an den Ausgängen A und B des Fensterdiskriminators sowie ein von der Brennersteuerung 3 erzeugtes, dem Eingang C zugeführtes EIN/AUS-Signal und ein vom Leistungsverstärker 95 erzeugtes, dem Eingang D zugeführtes Selbsthaltesignal und erzeugt an seinen beiden Ausgängen E und F Steuerbefehle für das nachgeschaltete Zeitglied 94 gemäß der folgenden Wahrheitstabelle:

|   | A | B | C | D | E | F |
|---|---|---|---|---|---|---|
| 1 | L | H | L | L | H | H |
| 2 | H | H | L | L | H | L |
| 3 | H | L | L | L | L | L |
| 4 | X | H | L | H | H | L |
| 5 | X | L | L | H | L | L |
| 6 | X | H | H | L | L | L |
| 7 | X | L | H | L | L | H |
| 8 | X | X | H | H | L | L |

Ferner erzeugt der Kommutator bei jedem Wechsel des Brennersignals am Eingang C einen kurzen H-Impuls am Ausgang F. Dieser Impuls hat natürlich nur dann eine Auswirkung auf die nachfolgenden Schaltungsteile, wenn der Zustand von F vor und nach dem Wechsel des Brennersignals nicht ohnehin H ist. Dies trifft gemäß Tabelle lediglich auf Übergänge von Zuständen gemäß Zeile 2 oder 3 nach solchen gemäß Zeile 6 und umgekehrt zu.

In der vorstehenden Tabelle bedeutet »X«, daß der Zustand des betreffenden Eingangs ohne Einfluß ist. Für das Brennersignal am Eingang C bedeutet H »Brenner EIN« und L »Brenner AUS«. Für das Selbsthaltesignal am Eingang D bedeutet H »Selbsthaltung aktiv« und L »Selbsthaltung inaktiv«.

Das Zeitglied 94 besteht aus einem umschaltbaren Zeitzähler, der beispielsweise mit einer integrierten Schaltung des Typs 14 541 aufgebaut ist. Das logische Signal an seinem mit dem Ausgang E des Kommutators verbundenen Eingang bestimmt die Zähldauer ($\tau_1$ bzw. $\tau_2$), das Signal am anderen, mit dem Ausgang F verbundenen Eingang bewirkt Rückstellung/Blockierung (bei H) bzw. Freigabe/Start (bei L) des Zeitzählers. Die Funktionsweise des Zeitglieds geht aus der folgenden Tabelle hervor:

| F | E = L | | E = H | |
|---|---|---|---|---|
|   | $G(t < \tau_1)$ | $G(t \geq \tau_1)$ | $G(t < \tau_2)$ | $G(t \geq \tau_2)$ |
| H | H | H | H | H |
| L | H | L | H | L |

Der Ausgang G des Zeitglieds geht also nach

Freigabe durch F von seinem Ruhezustand H jeweils nach Ablauf der durch E festgelegten Eigenzeit $\tau_1$ bzw. $\tau_2$ in den aktiven Zustand L über.

Der Leistungsverstärker 95 invertiert das Ausgangssignal des Zeitglieds und bildet damit das dem Kommutator-Eingang D zugeführte Selbsthaltesignal. Ferner steuert er das Absperrventil 60 und den in der Einheit 10 enthaltenen akustischen und gegebenenfalls auch optischen Alarmerzeuger 11 gemäß folgender Wahrheitstabelle:

| G | Selbsthaltung | Absperrventil | Alarm |
|---|---|---|---|
| H | L, Inaktiv | Offen | Aus |
| L | H, Aktiv | Zu | Ein |

Alarm wird also immer dann ausgelöst, wenn der Zeitzähler über die jeweils gerade relevante Zähldauer hinausgelaufen ist.

Die Schaltungseinheit 10 enthält außer dem eben erwähnten Alarmerzeuger 11 das für die Stromversorgung der gesamten Überwachungsvorrichtung erforderliche Netzteil 12 sowie Mittel 13 zur manuellen Rückstellung des Zeitglieds 94. Falls durch geeignete Schaltungsmaßnahmen dafür gesorgt ist, daß beim Einschalten der Speisespannung eine automatische Rücksetzung des Zeitglieds erfolgt, kann die manuelle Rücksetzung durch einen einfachen Schalter zur Unterbrechung der Speisespannung realisiert sein.

Die erfindungsgemäße Überwachungsvorrichtung wurde vorstehend im Zusammenhang mit einer Ölheizung beschrieben. Es versteht sich jedoch, daß die Vorrichtung natürlich auch zur Überwachung von anderen Leitungssystemen eingesetzt werden kann. Gegebenenfalls müßten eventuell die Ansprechschwellen und die Alarmverzögerungszeiten entsprechend angepaßt werden.

**Patentansprüche**

1. Überwachungsvorrichtung für ein Förderleitungssystem, in welchem das Fördermedium zumindest teilweise ruht, mit einem an das Leitungssystem (6) angeschlossenen Strömungsmesser (7, 8) und einer elektronischen Auswertungsschaltung (9) für das vom Strömungsmesser (7, 8) erzeugte, von Fördermediumsbewegungen im Leitungssystem (6) abhängige Meß-Signal ($V_H$), dadurch gekennzeichnet, daß die Auswerteschaltung (9) einen das Meß-Signal ($V_H$) mit zwei Schwellenwertsignalen ($V_{AS}$, $V_{HS}$) vergleichenden Schwellenwertdiskriminator (92), eine mit ihren Eingängen (A, B) an diesen angeschlossene und einen Eingang (C) für ein Betriebszustandssignal aufweisende Logikschaltung (93) und ein von dieser angesteuertes, umschaltbares Zeitglied (94) sowie einen Ausgang (G) für ein Alarmsignal aufweist, und daß die Auswerteschaltung ein Alarmsignal erzeugt, wenn ein für den jeweiligen Betriebszustand des Leitungssystems abnormer Strömungszustand über eine von zwei durch den Schaltzustand des Zeitglieds (94) bestimmten, unterschiedlich langen Alarmverzögerungszeiten ($\tau_1$, $\tau_2$) andauert, wobei das Zeitglied auf die längere Zeit ($\tau_2$) gestellt ist, wenn die Strömung im Leitungssystem (6) zwischen einer niedrigeren Alarmschwelle (AS) und einer höheren Hilfsschwelle (HS) liegt, und das Zeitglied auf die kürzere Zeit ($\tau_1$) gestellt wird, sobald die Strömung die Hilfsschwelle überschreitet.

2. Vorrichtung nach Anspruch 1, dadurch gekennzeichnet, daß das Zeitglied (94) gestartet wird, wenn im Ruhezustand des Leitungssystems die Strömung darin über der Alarmschwelle (AS) liegt und wenn im Betriebszustand die Strömung unter der Hilfsschwelle (HS) liegt.

3. Vorrichtung nach Anspruch 1 oder 2, dadurch gekennzeichnet, daß das Zeitglied (94) angehalten und rückgesetzt wird, wenn die Strömung im Leitungssystem vor Ablauf der jeweils maßgeblichen Alarmverzögerungszeit ($\tau_1$, $\tau_2$) in den für den jeweiligen Betriebszustand des Leitungssystems normalen Sollzustand übergeht.

4. Vorrichtung nach einem der Ansprüche 1—3, dadurch gekennzeichnet, daß das Zeitglied (94) rückgesetzt wird, wenn sich der Betriebszustand des Leitungssystems ändert.

5. Vorrichtung nach einem der Ansprüche 1—4, dadurch gekennzeichnet, daß die Alarmschwelle (AS) knapp oberhalb der Ansprechgrenze des Strömungsmessers (7, 8) liegt.

6. Vorrichtung nach einem der Ansprüche 1—5, dadurch gekennzeichnet, daß die Alarmschwelle (AS) bei einer Strömung von etwa 1—5 mm³/sec liegt.

7. Vorrichtung nach einem der Ansprüche 1—6, dadurch gekennzeichnet, daß die Hilfsschwelle (HS) bei einer Strömung von etwa 25—50 mm³/sec liegt.

8. Vorrichtung nach einem der Ansprüche 1—7, dadurch gekennzeichnet, daß die kürzere Alarmverzögerungszeit ($\tau_2$) etwa 2—5 min beträgt.

9. Vorrichtung nach einem der Ansprüche 1—8, dadurch gekennzeichnet, daß die längere Alarmverzögerungszeit ($\tau_1$) etwa 20—30 min beträgt.

10. Vorrichtung nach einem der Ansprüche 1—9, dadurch gekennzeichnet, daß die Alarmschwelle (AS) einstellbar ist.

11. Anwendung der Vorrichtung nach einem der Ansprüche 1—10 zur Überwachung eines Ölheizungssystems auf Lecks und Leitungsblockierungen.

**Claims**

1. Monitoring device for a conveying duct system, in which the conveyed medium is at times in a state of rest, with a flow meter (7, 8) connected to the duct system (6), and with an electronic evaluation circuit (9) for the measurement signal ($V_H$) which is produced by the flow meter (7, 8) and is dependent upon movements of conveyed medium in the duct system (6), characterised in that the evaluation circuit (9) has a threshold value discriminator (92) which compares the measurement signal ($V_H$) with two threshold value signals ($V_{AS}$, $V_{HS}$), a logic circuit (93) connected to the discriminator by its inputs (A, B) and having an input (C) for an operating condition signal and a reversible timing circuit (94), regulated by the logic circuit, and which also has an output (G) for an alarm signal, and that the evaluation circuit produces an alarm signal, if an abnormal flow condition for the respective operating condition of the duct system continues over one of two alarm delay periods ($\tau_1$, $\tau_2$) of differing lengths, determined by the switching condition of the timing circuit (94), the timing circuit being set to the longer period of time ($\tau_2$) if the flow in the duct system (6) lies between a lower alarm threshold (AS) and a higher auxiliary threshold (HS), and the timing circuit being set to the shorter period of time ($\tau_1$) as soon as the flow exceeds the auxiliary threshold.

2. Device according to Claim 1, characterized in that the timing circuit (94) is started when in the state of rest of the duct system the flow therein lies above the alarm threshold (AS) and when in the operating state the flow lies below the auxiliary threshold (HS).

3. Device according to Claim 1 or 2, characterized in that the timing circuit (94) is stopped and re-set when the flow in the duct system, before the completion of the respective alarm delay period ($\tau_1$, $\tau_2$), changes into the normal nominal state for the respective operating condition of the duct system.

4. Device according to one of Claims 1 to 3, characterized in that the timing circuit (94) is reset when the operating condition of the duct system alters.

5. Device according to one of Claims 1 to 4, characterized in that the alarm threshold (AS) lies closely above the response threshold of the flow meter (7, 8).

6. Device according to one of Claims 1 to 5, characterized in that the alarm threshold (AS) lies at a flow rate of approximately 1—5 mm³/sec.

7. Device according to one of Claims 1 to 6, characterized in that the auxiliary threshold (HS) lies at a flow rate of approximately 25—50 mm³/sec.

8. Device according to one of Claims 1 to 7, characterized in that the shorter alarm delay period ($\tau_2$) is approximately 2—5 min.

9. Device according to one of Claims 1 to 8, characterized in that the longer alarm delay period ($\tau_1$) is approximately 20—30 min.

10. Device according to any one of Claims 1 to 9, characterized in that the alarm threshold (AS) is adjustable.

11. Use of a device according to any one of Claims 1 to 10 for monitoring an oil heating system for leaks and line blockages.

## Revendications

1. Dispositif de contrôle pour un système de conduites de transport, dans lequel le fluide transporté est au moins en partie au repos, comportant un appareil de mesure d'écoulement (7, 8) relié au système de conduites (6) et un circuit électronique d'évaluation (9) du signal de mesure ($V_H$) produit par l'appareil de mesure d'écoulement (7, 8) et fonction des mouvements du fluide transporté dans le système de conduites (6), caractérisé en ce que le circuit d'évaluation (9) comprend un discriminateur de valeur de seuil (92) comparant le signal de mesure ($V_H$) avec deux signaux de valeurs de seuil ($V_{AS}$, $V_{HS}$), un circuit logique (93) relié par ses entrées (A, B) au discriminateur et comportant une entrée (C) pour un signal de condition de fonctionnement, et un organe de temporisation commutable (94), commandé par ce circuit ainsi qu'une sortie (G) pour un signal d'alarme, et en ce que le circuit d'évaluation produit un signal d'alarme lorsqu'une condition d'écoulement anormale pour la condition correspondante de fonctionnement du système de conduites a une durée supérieure à une de deux périodes de retardement d'alarme ($\tau_1$, $\tau_2$) déterminées par la condition de commande de l'organe de temporisation (94) et de durées différentes, l'organe de temporisation étant amené sur la période la plus longue ($\tau_2$), lorsque l'écoulement dans le système de conduites (6) est placé entre un seuil d'alarme inférieur (AS) et un seuil auxiliaire supérieur (HS), et l'organe de temporisation étant amené sur la période la plus courte ($\tau_1$) aussitôt que l'écoulement dépasse le seuil auxiliaire.

2. Dispositif selon la revendication 1, caractérisé en ce que l'organe de temporisation (94) est enclenché lorsque, dans la condition de repos du système de conduite, l'écoulement passant dans celui-ci est situé au-dessus du seuil d'alarme (AS) et lorsque, dans la condition de marche, l'écoulement est situé en-dessous du seuil auxiliaire (HS).

3. Dispositif selon la revendication 1 ou 2, caractérisé en ce que l'organe de temporisation (94) est arrêté et ramené en condition initiale lorsque l'écoulement dans le système de conduites passe, avant terminaison de la période de retardement d'alarme respectivement déterminante ($\tau_1$, $\tau_2$), dans la condition imposée normale pour la condition existante de fonctionnement du système de conduites.

4. Dispositif selon l'une des revendications 1 à 3, caractérisé en ce que l'organe de temporisation (94) est ramené en condition initiale lorsque la condition de marche du système de conduite change.

5. Dispositif selon l'une des revendications 1 à 4, caractérisé en ce que le seuil d'alarme (AS) est situé un peu au-dessus de la limite de réaction de l'appareil de mesure d'écoulement (7, 8).

6. Dispositif selon l'une des revendications 1 à 5, caractérisé en ce que le seuil d'alarme (AS) correspond à un écoulement d'environ 1 à 5 mm³/s.

7. Dispositif selon l'une des revendications 1 à 6, caractérisé en ce que le seuil auxiliaire (HS) correspond à un écoulement d'environ 25 à 50 mm³/s.

8. Dispositif selon l'une des revendications 1 à 7, caractérisé en ce que la période courte de retardement d'alarme ($\tau_2$) s'élève à environ 2 à 5 minutes.

9. Dispositif selon l'une des revendications 1 à 8, caractérisé en ce que la période longue de retardement d'alarme ($\tau_1$) s'élève à environ 20 à 30 minutes.

10. Dispositif selon l'une des revendications 1 à 9, caractérisé en ce que le seuil d'alarme (AS) est réglable.

11. Utilisation du dispositif selon l'une des revendications 1 à 10, pour le contrôle d'un système de chauffage au mazout en ce qui concerne des fuites et des obstructions de conduites.

Fig.1

$V_B$ 8,5

$V_{HS}$ 5,8

$V_{AS}$ 3,3

$V_R$ 3,0

K

$V_H$

-DF    0    +DF

201    202    203

t

101

102

103

# Fig.2